(19) Europäisches Patentamt
European Patent Office
Office européen des brevets

(11) **EP 1 924 415 B1**

(12) **FASCICULE DE BREVET EUROPEEN**

(45) Date de publication et mention
de la délivrance du brevet:
**16.11.2011 Bulletin 2011/46**

(21) Numéro de dépôt: 06779028.7

(22) Date de dépôt: **07.07.2006**

(51) Int Cl.:
***B29C 33/56*** *(2006.01)*     ***B29C 35/08*** *(2006.01)*
***H05B 6/02*** *(2006.01)*     ***H05B 6/14*** *(2006.01)*

(86) Numéro de dépôt international:
**PCT/FR2006/050689**

(87) Numéro de publication internationale:
**WO 2007/031660 (22.03.2007 Gazette 2007/12)**

(54) **DISPOSITIF DE TRANSFORMATION DE MATERIAUX UTILISANT UN CHAUFFAGE PAR INDUCTION**

VORRICHTUNG ZUM UMWANDELN VON MATERIAL UNTER VERWENDUNG VON INDUKTIONSERWÄRMUNG

DEVICE FOR TRANSFORMING MATERIALS USING INDUCTION HEATING

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **12.09.2005 FR 0509280**

(43) Date de publication de la demande:
**28.05.2008 Bulletin 2008/22**

(73) Titulaire: **Roctool**
**73370 Le Bourget du Lac (FR)**

(72) Inventeurs:
• **FEIGENBLUM, José**
**F-38000 Grenoble (FR)**
• **GUICHARD, Alexandre**
**F-73310 La Chapelle du Mont du Chat (FR)**

(74) Mandataire: **Lebrette, Camille**
**SCHMIT CHRETIEN SNC**
**16, rue de la Paix**
**75002 Paris (FR)**

(56) Documents cités:
**FR-A- 2 867 939**     **US-A- 4 439 492**
**US-A1- 2005 035 115**

• **PATENT ABSTRACTS OF JAPAN vol. 007, no. 044 (M-195), 22 février 1983 (1983-02-22) & JP 57 193340 A (AKIRA WASHIDA), 27 novembre 1982 (1982-11-27)**

**Description**

La présente invention concerne un dispositif et un procédé utilisant un chauffage par induction, notamment dans le but de réaliser la transformation ou le moulage de matériaux, en particulier de matériaux composites à matrice thermoplastique ou thermodurcissable.

Pour réaliser le moulage de pièces plastiques ou composites, les procédés connus de chauffage par induction présentent l'inconvénient de chauffer une partie importante d'un corps de moule. Il est ainsi connu, par le document JP-A-57193340, un dispositif pour la vulcanisation de caoutchouc comprenant deux corps de moule métalliques autour desquels est enroulée une bobine de chauffage par induction.

L'invention permet de limiter le chauffage par induction à une surface, afin de localiser le chauffage à l'interface moule/matière, ce qui permet de limiter la consommation, d'énergie, et donc d'améliorer le rendement énergétique du dispositif. La productivité est également augmentée avec des temps de chauffe et de refroidissement diminués car une fraction très faible du volume du moule est soumise au chauffage par induction.

L'invention a aussi pour but de réduire le coût de l'outillage.

L'invention concerne ainsi un dispositif de transformation, notamment par moulage, de matériaux, en particulier de matériaux composites à matrice thermoplastique ou thermodurcissable, comprenant :

- deux corps de moule mobiles l'un par rapport à l'autre, réalisés en un matériau électriquement conducteur et comportant chacun une zone moulante destinée à être en contact avec le matériau à transformer, et
- des moyens inducteurs pour générer un champ magnétique de fréquence F enveloppant les corps de moule,
- les faces d'au moins l'un des deux corps de moule situées en regard des moyens inducteurs, à l'exception de la zone moulante, étant recouvertes d'une couche de blindage d'un matériau amagnétique empêchant la pénétration du champ magnétique dans les corps de moule,

les corps de moule étant électriquement isolés l'un par rapport à l'autre lors de la phase de moulage, afin que les faces en regard des deux corps de moule délimitent un entrefer dans lequel circule le champ magnétique qui induit des courants à la surface de la zone moulante de chaque corps de moule, permettant ainsi de localiser le chauffage à l'interface zone moulante/matériau à transformer.

Selon une réalisation, les deux corps de moule sont recouverts d'une couche de blindage.

Selon une réalisation, les corps de moule comprennent un composé magnétique, de préférence de perméabilité magnétique relative et de résistivité élevées, par exemple un acier à base de nickel, de chrome et/ou de titane.

Selon une réalisation, un seul corps de moule est recouvert d'une couche de blindage, l'autre corps de moule comprenant un matériau amagnétique, de préférence faiblement résistif, comme par exemple de l'aluminium.

Selon une réalisation, le corps de moule recouvert d'une couche de blindage comprend un composé magnétique, de préférence de résistivité et de perméabilité magnétique relative élevées, par exemple un acier à base de nickel, de chrome et/ou de titane.

Selon une réalisation, la couche de blindage recouvre également une partie, ne constituant pas une zone moulante, d'au moins l'une des deux faces en regard des deux corps de moule.

Selon une réalisation, la couche de blindage comprend une tôle métallique fixée au corps de moule magnétique, celle-ci étant par exemple soudée ou vissée.

Selon une réalisation, la couche de blindage comprend un dépôt de matière, notamment un dépôt électrolytique.

Selon une réalisation, l'épaisseur e de la couche de blindage est au moins égale à :

$$e = 50 * (\rho/F)^{1/2}$$

$\rho$ était la résistivité du matériau amagnétique, et F la fréquence du champ magnétique.

Selon une réalisation la fréquence F est au moins égale à 25 KHz et de préférence au plus égale à 100 KHz.

Selon une réalisation, la couche de blindage comprend un matériau amagnétique de faible résistivité électrique, par exemple du cuivre ou de l'aluminium.

Selon une réalisation, une couche électriquement isolante est appliquée sur la zone moulante d'au moins un corps de moule pour parfaire l'isolation électrique de ces derniers, notamment lorsque le matériau à transformer est conducteur.

Selon une réalisation, les moyens inducteurs comprennent deux parties, chacune solidaire d'un des corps de moule pour permettre l'ouverture du dispositif, et déplaçables avec le corps de moule respectif.

Selon une réalisation, les deux parties des moyens inducteurs sont reliées électriquement au moyen d'au moins un contacteur électrique permettant de maintenir le contact lors du déplacement relatif d'un corps de moule par rapport à l'autre lors de la phase de transformation.

L'invention concerne également, un procédé de fabrication de pièces, notamment en grande série, faisant appel au dispositif défini ci-dessus.

D'autres caractéristiques et avantages de l'invention apparaîtront avec la description faite ci-dessous, cette dernière étant effectuée à titre d'exemple non limitatif en faisant référence aux dessins ci-après sur lesquels:

- la figure 1 représente un dispositif selon l'invention,
- la figure 2 montre le dispositif de la figure 1 en cours de transformation d'un matériau, .
- les figures 3a et 3b montrent deux dispositions différentes des inducteurs pour le dispositif montré sur la figure 1, ces figures correspondant à des vues selon la ligne 3-3 de la figure 2,
- La figure 4 montre une variante du dispositif, et
- la figure 5 montre une deuxième variante.

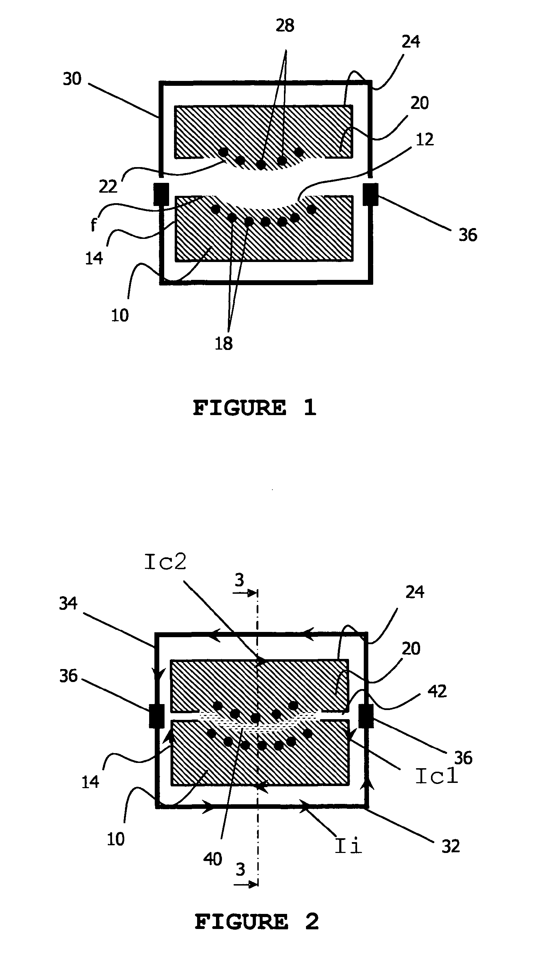

Le dispositif de moulage représenté sur les figures 1 et 2 comporte deux corps de moule 10, 20 mobiles l'un par rapport à l'autre. Les corps de moule 10, 20 sont réalisés en un matériau magnétique, dont une partie constitue une zone moulante respectivement 12 pour le corps de moule 10 et 22 pour le corps de moule 20. Les zones moulantes 12, 22 sont situées sur deux faces en regard des corps de moule.

Un réseau d'inducteurs 30, électriquement reliés en parallèle ou en série à un générateur de courant, est disposé autour des corps de moule. Chaque inducteur 30 comporte une spire conductrice et comprend deux parties 32, 34 séparables, dont chacune est solidaire d'un corps de moule, respectivement 10, 20.

Une partie de la surface extérieure de chaque corps de moule 10, 20, à l'exception des zones moulantes 12, 22, est recouverte d'une couche de blindage 14, 24. Dans l'exemple, le blindage recouvre les faces extérieures des corps de moule situées en regard des inducteurs 30, et une partie des faces en regard des deux corps de moule. En revanche, il n'est pas nécessaire que les faces extérieures des corps de moule qui ne sont pas en regard d'un inducteur (i.e. les faces parallèles au plan de la figure 1) soient recouvertes d'une couche de blindage, car le champ magnétique généré a une influence très limitée sur ces faces.

La figure 1 montre les deux corps de moule éloignés l'un de l'autre avant moulage, et la figure 2 est analogue à celle de la figure 1 et montre les deux corps de moule lors de l'opération de moulage.

Lors de la transformation d'un matériau 40, comme représenté sur la figure 2, celui-ci est enserré et maintenu sous pression entre les zones moulantes 12, 22 des deux corps de moule. Le matériau assure alors l'isolation électrique entre ces deux corps de moule 10, 20. Grâce à cette isolation électrique, l'espace délimité par les surfaces en regard des deux corps de moule constitue un entrefer 42, permettant la circulation d'un champ magnétique dans cet espace.

Lorsque les moyens inducteurs comprenant des spires conductrices 30 sont parcourus par des courants électriques Ii alternatifs de fréquence F, par exemple comprise entre 25 et 100 kilohertz, les inducteurs génèrent un champ magnétique qui enveloppe les corps de moule 10,20.

Le champ magnétique ainsi généré traverse les corps de moule, et circule également dans l'entrefer, c'est-à-dire entre les corps de moule.

Le champ magnétique induit des courants de sens opposé aux sens des courants Ii, et la présence de l'entrefer permet de générer des courants induits Ic1 et Ic2 qui circulent à la surface de chacun des deux corps de moule.

La couche de blindage empêche le champ magnétique d'atteindre les corps de moule, à l'exception des zones moulantes. Ces courants induits Ic1 et Ic2 ont donc une action thermique principalement à la surface de la zone moulante qui est donc la principale zone chauffée par l'action des inducteurs. Le blindage étant amagnétique, il est très peu chauffé par induction.

Pour que le dispositif fonctionne de manière efficace, il faut que la couche de blindage soit d'une épaisseur supérieure à la profondeur de pénétration du champ magnétique (épaisseur de peau). On empêche ainsi que le champ magnétique atteigne le corps de moule et échauffe celui-ci en d'autres endroits que la zone moulante.

Pour déterminer l'épaisseur de la couche de blindage requise, on utilise la formule suivante : $e = 50^* (\rho/F.\mu r)^{1/2}$ où p est la résistivité du matériau amagnétique, $\mu r$ la perméabilité magnétique relative du matériau et F la fréquence des courants inducteurs. Pour un matériau amagnétique, on prend : $\mu r=1$, et la formule devient : $e = 50^* (\rho/F)^{1/2}$. Pour que le blindage magnétique soit effectif, l'épaisseur de la couche de matériau amagnétique doit donc être supérieure à l'épaisseur de peau avec les fréquences mentionnées ci-dessus comprises entre 25 KHz et 100 KHz les épaisseurs de peau sont inférieures au millimètre.

Le dispositif selon l'invention est d'autant plus efficace que la présence de l'entrefer 42 a pour effet de concentrer le flux magnétique en son sein, ce qui augmente encore l'action du champ magnétique au niveau des zones moulantes, et donc l'énergie inductive apportée à la surface des zones moulantes.

Un dispositif selon l'invention présente donc l'avantage de chauffer localement la zone moulante, directement à l'interface zone moulante/matériau, et non dans l'épaisseur du corps de moule, ce qui représente une économie d'énergie importante. Un tel dispositif présente également l'avantage d'être simple et peu coûteux à fabriquer.

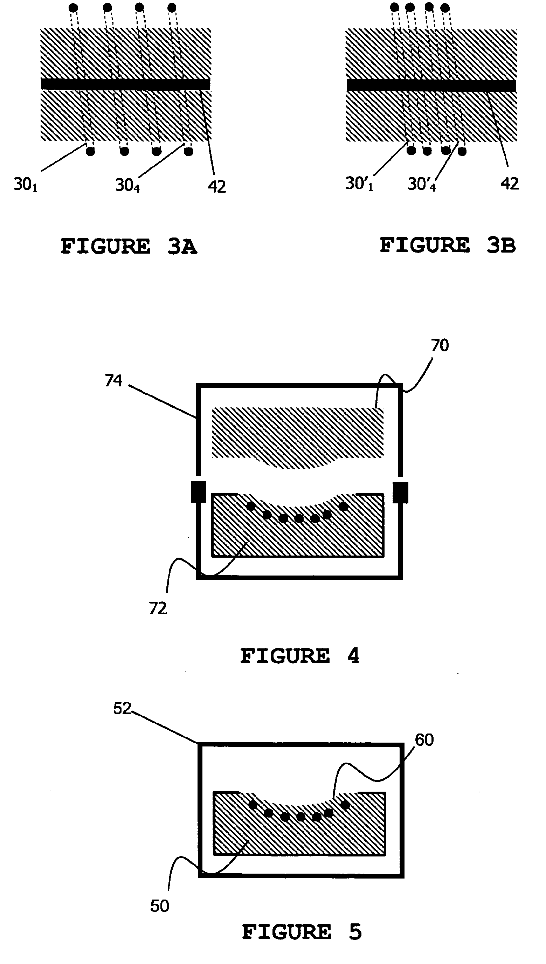

L'entrefer a également pour effet de limiter l'influence de la géométrie et/ou la répartition des inducteurs sur le chauffage résultant car l'entrefer 42 (figures 3a et 3b) 'lisse' l'énergie apportée par les inducteurs. Ainsi des spires inductrices $30'_1$ à $30'_4$ (fig. 3b) réparties régulièrement sur la longueur du moule ont pratiquement le même effet que le même nombre de spires inductrices $30_1$ à $30_4$ (fig. 3a) réparties sur une longueur plus courte. Cette disposition permet de choisir à volonté la répartition des spires inductrices.

La fixation de la couche de matériau amagnétique sur le corps de moule peut être effectuée de diverses manières, par exemple par fixation d'une tôle ou par dépôt de matière, par exemple un dépôt électrolytique.

Le matériau amagnétique utilisé pour constituer le blindage a, de préférence, une faible résistivité de manière à limiter les pertes énergétiques, comme par exemple le cuivre ou l'aluminium.

Le matériau magnétique utilisé pour le corps de moule est un composé magnétique pouvant présenter une température de Curie, ainsi qu'une résistivité électrique plus importante que celle du cuivre, comme par exemple des alliages d'acier à base de nickel, de chrome et/ou de titane. Une résistivité électrique importante du corps de moule constitue un avantage car elle permet un chauffage par induction plus efficace. Cependant, il est à noter que la perméabilité magnétique du matériau constituant les corps de moule influe également sur le rendement du chauffage par induction. En effet, si l'on se réfère à la formule citée plus haut, une perméabilité magnétique relative élevée conduit à une profondeur de pénétration du champ magnétique plus faible, une même quantité d'énergie est donc distribuée sur une zone plus restreinte, et il en résulte un chauffage plus important.

Lorsque le matériau présente un point de Curie, à une température proche de ce point de Curie, le matériau du corps de moule perd ses propriétés magnétiques et le chauffage par induction diminue fortement, ce qui permet de réguler la température de chauffage autour du point de Curie.

Le dispositif représenté sur les figures 1 et 2 est pourvu d'un système de refroidissement pour permettre la réalisation ou la transformation de pièces par chauffage à cadence élevée, le refroidissement étant mis en oeuvre entre deux traitements. A cet effet, dans chaque corps de moule on prévoit un réseau de canaux 18, 28 permettant de faire circuler un liquide de refroidissement à proximité des surfaces moulantes 12, 22. Le refroidissement ainsi obtenu est très performant, d'une part parce que le corps de moule métallique est thermiquement très conducteur, et d'autre part parce que les canaux peuvent être disposés au plus près des zones moulantes 12, 22.

Dans le cas du moulage d'un matériau composite, après un cycle de chauffage et de mise en forme, le refroidissement permet de figer le matériau composite dans sa forme définitive.

A la différence des systèmes connus, le dispositif selon l'invention permet de concentrer l'action du champ magnétique et les effets thermiques à proximité des zones moulantes. En conséquence, le chauffage étant plus localisé, il y a moins d'énergie thermique à dissiper lors du refroidissement, qui est donc plus rapide. On réduit ainsi le temps de cycle du dispositif et on augmente donc de manière significative la productivité.

Sur la figure 1 on a repéré la frontière f entre chaque corps de moule 10, 20 et la couche de matériau amagnétique qui le recouvre. La position de cette frontière f par rapport à la zone moulante 12, 22 a une influence sur la qualité du chauffage et donc du moulage. Avec le dispositif selon l'invention, il est aisé, par ajout ou enlèvement de matière, de modifier la position de la frontière f, ce qui procure une grande souplesse dans la conception de l'outillage ; il devient en effet possible d'ajuster la position de la frontière après des essais de traitement, notamment de moulage, dans les conditions réelles.

Les inducteurs étant en deux parties 32, 34 séparables et solidaires du moule la séparation des deux corps de moule est aisée, ce qui permet une extraction rapide de la pièce 40 après moulage, et contribue donc à une fabrication à cadence élevée. Lors de la transformation d'un matériau, la continuité électrique entre les deux parties 32, 34 du réseau d'inducteurs est assurée par des contacteurs électriques 36 . Ce contacteur autorise un déplacement relatif des deux parties 32, 34 du réseau d'inducteurs, car la transformation des matériaux se fait généralement à pression constante mais elle occasionne une diminution d'épaisseur du matériau, et donc une diminution de la distance entre les deux corps de moule 10, 20.

La transformation de matériaux composites électriquement conducteurs nécessite d'utiliser une variante du dispositif. En effet, avec des matériaux conducteurs, comme par exemple des matériaux à base de fibres de carbone, l'isolation électrique entre les deux corps de moule n'est pas toujours parfaitement assurée, et des courts-circuits peuvent se produire localement, générant des arcs électriques pouvant affecter la surface du matériau à transformer et/ou la surface des zones moulantes. Pour parfaire l'isolation électrique et ainsi éviter tout risque de court-circuit, on dépose une couche d'isolant électrique sur au moins une des deux zones moulantes 12, 22. Une telle couche comprend par exemple des matériaux à base de téflon, de carbone amorphe, de fibre de verre ou encore de céramique... Cette couche doit avoir une tenue en température et une résistance mécanique adaptée, avec une épaisseur de l'ordre du micromètre.

De façon classique, des moyens mécaniques (non représentés) d'éjection de la pièce fabriquée sont également prévus.

Le procédé de fabrication ainsi mis en oeuvre comprend donc principalement quatre phases :

- mise en position du (ou des) matériaux de la pièce à traiter sur le corps de moule inférieur du dispositif,
- chauffage des deux zones moulantes, et mise sous pression du matériau entre les deux zones moulantes pendant un temps donné,
- mise en oeuvre du refroidissement des corps de moule, afin de refroidir la pièce,
- remontée du corps de moule supérieur et éjection/enlèvement de la pièce.

Le procédé ainsi mis en oeuvre bénéficie largement des avantages apportés par le dispositif selon l'invention, notamment en terme de productivité : le chauffage local lié à la zone moulante permet de minimiser les temps de cycles.

L'ajustage aisé de la zone chauffée par ajout ou enlèvement de portions de la couche de blindage procure une grande souplesse : on peut modifier facilement l'outillage en fonction des résultats obtenus lors des premiers essais.

Enfin, l'outillage est économique à produire, car la couche de blindage 14, 24, ne nécessite pas de fabrication complexe ou coûteuse.

Une variante, représentée figure 4, du dispositif selon l'invention permet de réaliser un outillage plus simple, en particulier dans le cadre de la transformation de pièces très fines, notamment des pièces d'épaisseur inférieure au millimètre. En effet, de telles épaisseurs permettent de limiter le chauffage à une seule face de la pièce. On utilise un dispositif dans lequel un des deux corps de moule n'est pas recouvert d'une couche de blindage, ce corps de moule (70) comportant un matériau amagnétique. Ainsi, ce corps de moule (70), non transparent au champ magnétique, permet toujours de disposer d'un entrefer dans lequel circule le champ magnétique crée par le réseau d'inducteurs (74). Le chauffage par induction est donc réalisé principalement au niveau de la zone moulante du corps de moule 72 qui est recouvert d'une couche de blindage. Un tel dispositif est moins coûteux à réaliser, car le corps de moule (70) ne comporte pas de couche de blindage. Dans l'exemple de la figure 4, le corps de moule 70 est dépourvu de circuit de refroidissement.

Dans une autre variante (figure 5) on prévoit un seul corps de moule 50 autour duquel sont disposées les spires inductrices 52. Dans cette configuration, la couche de blindage qui entoure le corps de moule permet de localiser le chauffage sur la zone moulante 60, sans présence d'entrefer. L'absence de cet entrefer rend un tel dispositif plus sensible à la géométrie du réseau d'inducteurs, mais le chauffage reste principalement localisé à la surface de la zone moulante grâce à la couche de blindage.

## Revendications

**1.** Dispositif de transformation par chauffage, notamment pour le moulage, de matériaux, en particulier de matériaux composites à matrice thermoplastique ou thermodurcissable, comprenant :

- deux corps de moule (10, 20) mobiles l'un par rapport à l'autre, réalisés en un matériau électriquement conducteur et comportant une zone moulante (12, 22) destinée à être en contact avec le matériau à transformer, et
- des moyens inducteurs (30) pour générer un champ magnétique de fréquence F enveloppant les corps de moule,

le dispositif étant **caractérisé en ce que** les faces d'au moins l'un des deux corps de moule (10, 20) situées en regard des moyens inducteurs, à l'exception des zones moulantes (12, 22), sont recouvertes d'une couche de blindage (14, 24) d'un matériau magnétique empêchant la pénétration du champ magnétique dans les corps de moule (10, 20),

et **en ce que** les corps de moule sont électriquement isolés l'un par rapport à l'autre lors de la phase de moulage, afin que les faces en regard des deux corps de moule délimitent un entrefer (42) dans lequel circule le champ magnétique qui induit des courants à la surface de la zone moulante (12, 22) de chaque corps de moule (10, 20), permettant ainsi de localiser le chauffage à l'interface zone moulante/matériau à transformer.

**2.** Dispositif selon la revendication 1, dans lequel les deux corps de moule (10, 20) sont recouverts d'une couche de blindage (14, 24).

**3.** Dispositif selon la revendication 2, dans lequel les corps de moule (10, 20) comprennent un composé magnétique, de préférence de perméabilité magnétique relative et de résistivité élevées, par exemple un acier à base de nickel, de chrome et/ou de titane.

**4.** Dispositif selon la revendication 1, dans lequel un seul corps de moule (72) est recouvert d'une couche de blindage, l'autre corps de moule (70) comprenant un matériau amagnétique, de préférence faiblement résistif, comme par exemple de l'aluminium.

**5.** Dispositif selon la revendication 4, dans lequel le corps de moule (72) recouvert d'une couche de blindage comprend un composé magnétique, de préférence de résistivité et de perméabilité magnétique relative élevées, par exemple un acier à base de nickel, de chrome et/ou de titane.

**6.** Dispositif selon l'une des revendications 1 à 5, dans lequel la couche de blindage (14, 24) recouvre une partie, ne constituant pas une zone moulante, d'au moins l'une des deux faces en regard des deux corps de moule.

**7.** Dispositif selon l'une des revendications 1 à 6, dans lequel la couche de blindage (14, 24) comprend une tôle métallique fixée au corps de moule, celle-ci étant par exemple soudée ou vissée.

**8.** Dispositif selon l'une des revendications 1 à 7, dans lequel la couche de blindage (14, 24) comprend un dépôt de matière, notamment un dépôt électrolytique.

**9.** Dispositif selon l'une des revendications précédentes, dans lequel l'épaisseur e de la couche de blindage (14, 24) est au moins égale à une valeur telle que :

$$e = 50*(\rho/F)^{1/2}$$

où $\rho$ est la résistivité du matériau amagnétique, et F la fréquence du champ magnétique.

**10.** Dispositif selon une des revendications précédentes dans lequel la fréquence F est au moins égale à 25 KHz et de préférence au plus égale à 100 KHz.

**11.** Dispositif selon l'une des revendications précédentes dans lequel la couche de blindage (14, 24) comprend un matériau amagnétique de faible résistivité électrique, par exemple du cuivre ou de l'aluminium.

**12.** Dispositif selon l'une des revendications précédentes, dans lequel une couche isolante est appliquée sur une zone moulante d'au moins un corps de moule pour parfaire l'isolation électrique entre les corps de moule, notamment lorsque le matériau à transformer est conducteur.

**13.** Dispositif selon l'une des revendications précédentes, dans lequel les moyens inducteurs (30) comprennent deux parties (32, 34), chacune solidaire d'un des corps de moule et déplaçables avec le corps de moule respectif.

**14.** Dispositif selon la revendication 13, dans lequel les deux parties (32, 34) des moyens inducteurs sont reliées électriquement au moyen d'au moins un contacteur électrique (36) permettant de maintenir le contact lors du déplacement relatif d'un corps de moule (10, 20) par rapport à l'autre lors de la phase de transformation.

**15.** Procédé de fabrication de pièces, notamment en grande série, faisant appel à un dispositif selon l'une des revendications précédentes, et comprenant les étapes suivantes :

- mise en position du (ou des) matériaux (40) de la pièce à traiter sur le corps de moule inférieur (10) du dispositif,
- chauffage des deux zones moulantes (12, 22), et mise sous pression du matériau (40) entre les deux zones moulantes pendant un temps donné.

**Claims**

**1.** - Device for converting materials by heating, in particular for moulding and in particular for composite materials with a thermoplastic or thermosetting matrix, comprising:

- two mould bodies (10, 20) that are mobile relative to each other, made of an electrically conducting material and comprising a moulding zone (12, 22) intended to be in contact with the material being converted, and
- induction means (30) for generating a magnetic field with a frequency F wrapped around the mould bodies,

the device being **characterised in that** the faces of at least one of the two mould bodies (10, 20) located opposite the induction means, except for the moulding zones (12, 22), are coated with a shielding layer (14, 24) made of a non-magnetic material preventing the magnetic field from penetrating into the mould bodies (10, 20), and **in that** the mould bodies are electrically insulated from each other during the moulding phase, so that the opposing faces of the two mould bodies define an air gap (42) in which the magnetic field circulates, and induces currents at the surface of the moulding zone (12, 22) of each mould body (10, 20), thus enabling the heating to be localised to the interface between the moulding zone and the material being converted.

**2.** - Device according to claim 1, wherein the two mould bodies (10, 20) are coated with a shielding layer (14, 24).

**3.** - Device according to claim 2, wherein the mould bodies (10, 20) comprise a magnetic compound, preferably with high relative magnetic permeability and resistivity, for example a nickel, chromium and/or titanium-based steel.

**4.** - Device according to claim 1, wherein a single mould body (72) is coated with a shielding layer, the other mould body (70) comprising a non-magnetic material, preferably with low resistivity, such as aluminium.

**5.** - Device according to claim 4, wherein the mould body (72) coated with a shielding layer comprises a magnetic compound, preferably with high relative magnetic permeability and resistivity, for example a nickel, chromium and/or titanium-based steel.

**6.** - Device according to one of the claims 1 to 5, wherein the shielding layer (14, 24) coats a part, not making up a moulding zone, of at least one of the two opposing faces of the two mould bodies.

**7.** - Device according to one of the claims 1 to 6, wherein the shielding layer (14, 24) comprises a metallic plate attached to the mould body, this for example being by welding or screwing.

**8.** - Device according to one of the claims 1 to 7, wherein the shielding layer (14, 24) comprises a material deposit, in particular an electrolytic deposit.

**9.** - Device according to one of the previous claims, wherein the thickness e of the shielding layer (14, 24) is at least equal to a value such as:

$$e = 50^* \, (p/F)^{1/2}$$

where p is the resistivity of the non-magnetic material and F the frequency of the magnetic field.

**10.** - Device according to one of the previous claims, wherein the frequency F is at least equal to 25 KHz and preferably at most equal to 100 KHz.

**11.** - Device according to one of the previous claims, wherein the shielding layer (14, 24) comprises a non-magnetic material with low electrical resistivity, for example copper or aluminium.

**12.** - Device according to one of the previous claims, wherein an insulating layer is applied to a moulding zone of at least one mould body so as to complete the electrical insulation between the mould bodies, in particular when the material being converted is a conductor.

**13.** - Device according to one of the previous claims, wherein the induction means (30) comprise two parts (32, 34), each connected to one of the mould bodies and capable of being moved with the respective mould body.

**14.** - Device according to claim 13, wherein the two parts (32, 34) of the inductionr means are electrically connected by means of at least one electrical contactor (36) maintaining contact when a mould body (10, 20) is moved in relation to the other during the conversion phase.

**15.** - Method for manufacturing parts, in particular for mass production, involving a device according to one of the previous claims and comprising the following steps:

    - positioning the material(s) (40) of the part being processed onto the lower mould body (10) of the device,
- heating the two moulding zones (12, 22) and the pressurizing the material (40) between the two moulding zones for a given period of time.

**Patentansprüche**

**1.** Umwandlungsvorrichtung durch Erhitzen, insbesondere zum Formen, von Materialien, hauptsächlich von verbundmaterialen mit thermoplastischer Matrix oder durch wärme aushärtbaren Matrix , aufweisend:

    - zwei zueinander bewegbaren Formkörpern (10, 20), aus einem elektrisch leitenden Material hergestellt und bestehend aus einem Formbereich (12, 22), um mit dem zu umwandelnde Material in Kontakt zu bringen , und
    - Induktormitteln (30), um ein Magnetfeld mit einer Frequenz F zu erzeugen , die die Formkörpern umhüllen,
    wobei die Vorrichtung **dadurch gekennzeichnet ist, dass** die Seiten von mindestens einer der beiden Formkörpern (10, 20), die gegenüber den Induktormitteln liegen, ausgenommen die Formbereichen (12, 22), von einer Abschirmschicht (14, 24) eines unmagnetischen Materials bedeckt sind, die das Eindringen des Magnetfeldes in die Formkörpern (10, 20) verhindert,
    und **dadurch gekennzeichnet, dass** die Formkörpern bei der Formgebungsphase voneinander elektrisch isoliert sind, damit die Seiten, die gegenüber der Formkörpern liegen, einen Luftspalt (42) durch den das Magnetfeld fließt, das Ströme auf die Fläche des Formbereiches (12, 22) von jedem Formkörper (10, 20) induziert, abgrenzen, wobei dadurch die Heizung an die Schnittstelle Formbereich/ zu umwandelnde Material lokalisiert werden kann.

**2.** Vorrichtung nach Anspruch 1, in welche die beiden Formkörpern (10, 20) von einer Abschirmschicht (14, 24) bedeckt sind.

**3.** Vorrichtung nach Anspruch 2, in welche die Formkörpern (10, 20) eine magnetische Komponente umfassen, vorzugsweise mit einer relativ hohe magnetischen Permeabilität und mit einer hohen Widerstandsgröße , z.B. eine Nickel- Chrom - und/ oder Titanbasierte Stahl.

**4.** Vorrichtung nach Anspruch 1, in welche, einen einzigen Formkörper (72) von einer Abschirmschicht bedeckt ist, der andere Formkörper (70) ein unmagnetisches Material aufweist, vorzugsweise mit einer niedrigen Widerstandsgröße , wie z.B. Aluminium.

5. Vorrichtung nach Anspruch 4, in welche der von einer Abschirmschicht bedeckten Formkörper (72) eine magnetische Komponente umfasst, vorzugsweise mit einer relativ hohen Widerstandsgröße und hohe magnetischen Permeabilität, z.B. eine Nickel-Chrom - und/oder Titanbasierte Stahl.

6. Vorrichtung nach einem der Ansprüche 1 bis 5, in welche die Abschirmschicht (14, 24) einen Abschnitt, der nicht einen Formbereich bildet, mit mindestens einer der beiden Seiten, die gegenüber der beiden Formkörpern liegt bedeckt.

7. Vorrichtung nach einem der Ansprüche 1 bis 6, in welche die Abschirmschicht (14, 24) ein Metallblech, das am Formkörper befestigt ist, aufweist, wobei dieses Blech z.B. verschweißt oder verschraubt ist.

8. Vorrichtung nach einem der Ansprüche 1 bis 7, in welche die Abschirmschicht (14, 24) eine Materialablagerung, insbesondere eine elektrolytische Ablagerung aufweist.

9. Vorrichtung nach einem der vorherigen Ansprüche, in welche die Dicke e der Abschirmschicht (14, 24) mindestens gleich einem Wert wie:

$$e=50^{*}(p/F)^{1/2},$$

ist

wo p die Widerstandsgröße des unmagnetischen Materials, und F die Frequenz des Magnetfeldes ist.

10. Vorrichtung nach einem der vorherigen Ansprüche, in welche die Frequenz F mindestens gleich 25 KHz und vorzugsweise höchstens gleich 100 KHz ist.

11. Vorrichtung nach einem der vorherigen Ansprüche, in welche die Abschirmschicht (14, 24) ein unmagnetisches Material mit einer niedrigen Widerstandsgröße umfasst, wie z.B. Kupfer oder Aluminium.

12. Vorrichtung nach einem der vorherigen Ansprüche, in welche eine Isolierschicht auf einen Formbereich von mindestens einem Formkörper aufgebracht wird, um die elektrische Isolierung zwischen die Formkörpern zu vervollkommnen, insbesondere wenn das zu umwandelnde Material leitfähig ist.

13. Vorrichtung nach einem der vorherigen Ansprüche, in welche die Induktormitteln (30) zwei Abschnitten (32, 34) aufweisen, die jeweils mit einem der Formkörpern verbunden sind und, die mit dem entsprechenden Formkörper umstellbar sind.

14. Vorrichtung nach Anspruch 13, in welche die beiden Abschnitten (32, 34) der Induktormitteln mittels mindestens einem elektrischen Schalter (36) elektrisch verknüpft sind, wobei ermöglicht wird den Kontakt während der relative Umstellung eines Formkörpers (10, 20) gegenüber des anderen bei der Umstellphase zu erhalten.

15. Verfahren zur Herstellung von Teilen, insbesondere in hoher Stückzahl, wobei es eine Vorrichtung nach einem der vorherigen Ansprüche verwendet und wobei es die folgenden Etappen aufweist:

- das (oder die) material(en) (40) des zu behandelnden Teils auf der unteren Formkörper (10) der Vorrichtung in Position zu bringen,
- die beiden Formbereichen (12, 22) zu erhitzen, und das Material (40) zwischen den beiden Formbereichen über eine vorgegebene Zeitdauer unter Druck zu setzen.

28

30

24

20

12

22

f

14

36

10

18

**FIGURE 1**

Ic2

3

34

24

20

36

42

36

14

Ic1

10

32

40

3

Ii

**FIGURE 2**

$30_1$     $30_4$     42

**FIGURE 3A**

$30'_1$     $30'_4$     42

**FIGURE 3B**

74     70

72

**FIGURE 4**

52     60

50

**FIGURE 5**

**EP 1 924 415 B1**

**RÉFÉRENCES CITÉES DANS LA DESCRIPTION**

**Documents brevets cités dans la description**

- JP 57193340 A